(19) Europäisches Patentamt
European Patent Office
Office européen des brevets

(11) EP 4 617 330 A1

(12) **EUROPEAN PATENT APPLICATION**
published in accordance with Art. 153(4) EPC

(43) Date of publication:
**17.09.2025 Bulletin 2025/38**

(21) Application number: **23888861.4**

(22) Date of filing: **02.08.2023**

(51) International Patent Classification (IPC):
***C09D 11/101*** *(2014.01)* ***C09D 11/03*** *(2014.01)*
***H01M 10/0562*** *(2010.01)* ***H01M 10/052*** *(2010.01)*

(52) Cooperative Patent Classification (CPC):
**C09D 11/03; C09D 11/101; H01M 10/052; H01M 10/0562;** Y02E 60/10

(86) International application number:
**PCT/KR2023/011353**

(87) International publication number:
**WO 2024/101594 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022 KR 20220150853**

(71) Applicant: **SK On Co., Ltd.**
**Seoul 03161 (KR)**

(72) Inventors:
- **KIM, Kyeong-Joon**
  **Daejeon 34124 (KR)**
- **PARK, Myung-Soo**
  **Daejeon 34124 (KR)**
- **PARK, Ji-Young**
  **Daejeon 34124 (KR)**

(74) Representative: **Prüfer & Partner mbB**
**Patentanwälte · Rechtsanwälte**
**Sohnckestraße 12**
**81479 München (DE)**

# (54) INK COMPOSITION FOR LIGHT-SINTERING, OXIDE-BASED SOLID ELECTROLYTE SHEET AND ALL-SOLID LITHIUM SECONDARY BATTERY

(57) The ink composition for light-sintering according to one embodiment may be prepared by including a binder that has excellent solubility and thus does not cause agglomeration during slurry preparation. By containing the ink composition for light-sintering, the oxide-based thin film sheet according to one embodiment may be formed, through light-sintering, in such a way that the particles thereof exhibit an appropriate shape, density, connection pattern, and the like, and thus an oxide-based solid electrolyte sheet having excellent durability and ionic conductivity can be prepared without being delaminated from a substrate or such issues. The oxide-based solid electrolyte sheet according to one embodiment is sintered rapidly through light-sintering and is thus prepared in a short period of time without loss of materials, such as lithium, or destruction of a substrate, and can be made thinner and larger without additional processing steps.

[FIG.2]

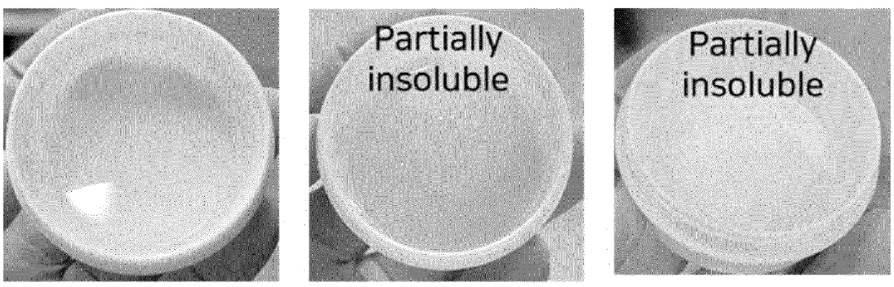


PVB1 PVB2 PVB3

EP 4 617 330 A1

## Description

Technical Field

The present disclosure relates to an ink composition for light-sintering including an ionic conductive oxide, an oxide-based solid electrolyte sheet and an all-solid lithium secondary battery.

Background Art

Recently, as interest in environmental issues has increased, research into electric vehicles (EV) that may replace fossil fuel-based vehicles, which are one of the main causes of air pollution, and Energy Storage Systems (ESS) utilizing renewable energy has been actively conducted. Lithium secondary batteries with high discharge voltage and output stability are mainly used as power sources for these electric vehicles (EV).

On the other hand, existing lithium secondary batteries to which liquid electrolytes such as organic solvents are applied may have the risk of ignition due to electrolyte leakage, and may result in problems such as electrolyte decomposition by electrode reaction and expansion of the battery. Additionally, due to the separator included in existing lithium secondary batteries to prevent these problems, there is a limit to securing high energy density of the battery. Accordingly, research and development on all-solid-state lithium secondary batteries to which solid-state electrolytes are applied have been actively conducted to solve the above problems.

Solid electrolytes applied to all-solid-state lithium secondary batteries are mainly classified into a sulfide-based electrolyte, a polymer-based electrolyte, and an oxide-based solid electrolyte, and thereamong, oxide-based solid electrolytes are attracting attention as next-generation solid electrolyte materials due to their excellent chemical/thermal stability and mechanical strength.

The solid electrolytes used in all-solid-state lithium secondary batteries are manufactured by a sintering process, and generally, solid electrolytes are manufactured using a thermal sintering process, a laser sintering process, or a microwave sintering process.

However, since the thermal sintering process involves various processes such as heating, heat treatment, and cooling, this has the disadvantage of a significantly long process time, and since the process is performed in a high-temperature environment, there are restrictions on the selection of the substrate.

A rapid heat treatment process is a sintering method that may solve the problem of thermal sintering requiring a long time for sintering as described above. The rapid thermal annealing (RTA) process increases the temperature significantly quickly to shorten the process time as compared to general heat treatment processes, but since the RTA process still relies on natural cooling for cooling, it takes a long time to cool, and there are problems such as material destruction for forming lithium ion secondary batteries due to residual thermal stress.

Summary of Invention

Technical Problem

An aspect of the present disclosure is to provide an ink composition for optical-sintering including a binder having excellent solubility.

An aspect of the present disclosure is to provide an oxide-based solid electrolyte sheet sintered rapidly through optical-sintering and may be manufactured in a short period of time, and may be thinned and made larger without additional processing steps.

An aspect of the present disclosure is to provide an all-solid lithium secondary battery including the oxide-based solid electrolyte sheet and having improved safety and improved energy density.

Solution to Problem

An ink composition for light-sintering according to an embodiment includes: a binder including a polymer having a hydroxyl group, an acetyl group, and an acetal group, wherein a Hansen Solubility Parameter (HSP) value of the polymer is 18 $MPa^{0.5}$ to 28 $MPa^{0.5}$, and a weight average molecular weight of the polymer is $1.0 \times 10^4$ g/mol to $9.0 \times 10^4$ g/mol.

The polymer may include a polyvinyl acetal copolymer including a structural unit having a hydroxyl group, a structural unit having an acetyl group, and a structural unit having an acetal group.

The structural unit having the hydroxyl group may be a structural unit represented by the following chemical formula 1.

[Chemical Formula 1]

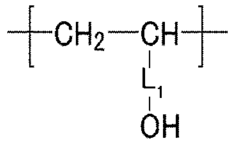

(In chemical formula 1, $L_1$ may represent a single bond or alkylene having 1 to 5 carbon atoms.)

The structural unit having the acetyl group may be a structural unit represented by the following chemical formula 2.

[Chemical Formula 2]

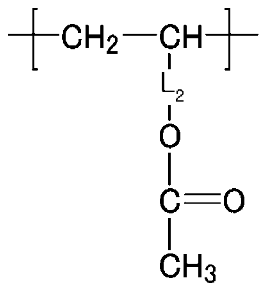

(In chemical formula 2, $L_2$ may represent a single bond or alkylene having 1 to 5 carbon atoms.)

The structural unit having the acetal group may be a structural unit represented by the following chemical formula 3.

[Chemical Formula 3]

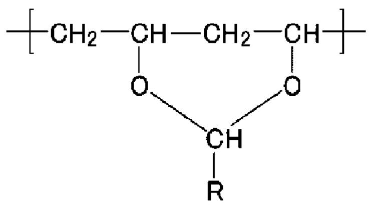

(In chemical formula 3, R may represent hydrogen, substituted or unsubstituted hydrocarbyl having 1 to 10 carbon atoms.)

With respect to 100 wt% of the polyvinyl acetal copolymer, a content of the structural unit having the hydroxy group may be 4 wt% to 25 wt%.

With respect to 100 wt% of the polyvinyl acetal copolymer, a content of the structural unit having the acetyl group may be 1 wt% to 12 wt%.

With respect to 100 wt% of the polyvinyl acetal copolymer, a content of the structural unit having the acetal group may be 65 wt% to 85 wt%.

The polymer may be a random copolymer.

A viscosity of the ink composition for light-sintering may be 1,000 cp to 10,000 cp at a temperature of 25°C.

The ink composition for light-sintering may further include lithium ion conductive oxide-based particles, a solvent, and a plasticizer.

A Hansen Solubility Parameter (HSP) value of the solvent may be 18 $MPa^{0.5}$ to 28 $MPa^{0.5}$.

The solvent may be at least one selected from the group consisting of 1,3-dioxane, dimethyl carbonate, acetonitrile, methylpyrrolidone, dimethylformamide, acetone, isopropanol, n-propanol, n-hexane, and toluene.

The plasticizer may be at least one selected from the group consisting of dibutyl phthalate (DBP), butyl benzyl phthalate (BBP), di-isononyl phthalate (DINP), di(2-ethylhexyl)phthalate (DEHP), di(n-octyl)phthalate (DNOP), and di-isodecyl phthalate (DIDP).

The lithium ion conductive oxide-based particles may be at least one selected from the group consisting of a garnet compound, a NASICON compound, and a perovskite compound.

An oxide-based solid electrolyte sheet may be manufactured with the ink composition for light-sintering.

The oxide-based solid electrolyte sheet may have an ionic conductivity of $10^{-6}$ S/cm to $10^{-2}$ S/cm.

The oxide-based solid electrolyte sheet may have an area of 0.25 $cm^2$ or more and a thickness of 10 μm to 300 μm.

Provided is a method for manufacturing an oxide-based solid electrolyte sheet according to an embodiment including: applying the ink composition for light-sintering onto a substrate; drying the substrate to manufacture an oxide-based sheet; and manufacturing an oxide-based solid electrolyte sheet by light-sintering the oxide-based sheet.

A temperature of the oxide-based sheet during the light-sintering of the oxide-based sheet may be 25°C to 500°C.

An all-solid lithium secondary battery may include the oxide-based solid electrolyte sheet.

Advantageous Effects of Invention

According to an embodiment, an ink composition for light-sintering including a binder that has excellent solubility and thus does not cause agglomeration during slurry preparation may be provided.

According to an embodiment, an oxide-based solid electrolyte sheet may be provided that is sintered rapidly through light-sintering and may be prepared in a short period of time without loss of materials, such as lithium or destruction of a substrate, and may be made thinned and larger without an additional processing process.

According to an embodiment, an all-solid lithium secondary battery having high safety and high energy density may be provided.

Brief Description of Drawings

FIGS. 1A to 1D are conceptual diagrams illustrating the form in which a particle-to-particle connection structure and a particle shape are changed step by step according to the sintering progress.

FIG. 2 is an image illustrating a degree of dissolution of a first slurry of Inventive Example 1, Comparative Example 1, and Comparative Example 2.

FIG. 3 is an image illustrating a state before and after sintering of an oxide-based solid electrolyte sheet of Manufacturing Example 1.

FIG. 4 is a graph illustrating electrochemical impedance results for measuring the ionic conductivity of the oxide-based solid electrolyte sheet of Manufacturing Example 1.

Best Mode for Invention

Hereinafter, a specific embodiment of an example will be described. However, the embodiment of an example may be modified in various other forms, and the scope of an example is not limited to the embodiment described below.

Additionally, in the present disclosure, the singular expression includes the plural expression unless the context clearly indicates otherwise, and the same reference sign or a reference sign given in a similar manner throughout the present disclosure refers to the same component or corresponding component.

In the present disclosure, the 'sintering' phenomenon refers to a phenomenon in which powder-shaped particles are tightly adhered to each other and solidified due to heat, and denotes a process in which the powder-shaped particles are adhered to each other through a thermal activation process and become a single mass.

In this disclosure, 'light-sintering' refers to sintering by inducing a resonance phenomenon between an original wavelength range of a material and a wavelength range of light and a heat generation phenomenon therefrom and causing a thermal reaction in the material.

In this disclosure, unless otherwise specifically defined, "polymer" may include an oligomer and a polymer, and may include a homogeneous polymer and a copolymer. The copolymer may include an alternating copolymer, a block copolymer, a random copolymer, a branched copolymer, a crosslinked copolymer, or all of these copolymer.

When applying a general high-temperature sintering process to the manufacturing of an oxide molded body, since the oxide molded body is sintered at a temperature of 1000°C or higher for a long period of time, such as 1 hour to 24 hours, lithium and other components may volatilize or evaporate, resulting in material loss, and it may be difficult to control the density according to the sintering conditions, and there is a problem that a substrate is deformed or destroyed as an entire substrate is heated. Additionally, it may be difficult to thin an oxide-based sheet manufactured through this high-temperature sintering process and form a homogeneous surface thereof, and thus, an additional processing process is required.

On the other hand, in the case of a Rapid Thermal Annealing (RTA) process, a temperature is raised significantly quickly and may be performed in a short period of time as compared to the general high-temperature sintering process, but

it is still difficult to solve the problem in which the substrate is deformed or destroyed. Additionally, in the case of a process using a laser, since a reaction proceeds locally near a region in which the laser is incident, an application area is narrow during a sintering process, and thus, the sintering process takes a long time, and in the case of a process using a microwave, a sintering depth is shallow and there are limitations in a selection of the substrate.

Accordingly, an embodiment is to provide a technology for sintering an oxide-based solid electrolyte sheet by applying a light-sintering process.

The light-sintering is a process densifying particles through a photothermal effect by applying a momentary light pulse, and has the advantage of being able to sinter a slurry printed on a substrate in a significantly short time at room temperature and atmospheric pressure conditions. Additionally, such a light-sintering process may be applied to large-area substrates, and further, since high-speed sintering is possible at room temperature, productivity may be improved due to mass production.

When manufacturing an oxide-based solid electrolyte sheet by light-sintering, a slurry (hereinafter, also referred to as an ink composition for light-sintering) including an oxide-based solid electrolyte, a binder, and a solvent may be applied and then optically sintered. In this case, the ink composition for light-sintering may include a binder that may easily control the slurry to have an appropriate viscosity even with a small amount of solvent and may effectively bind the oxide-based solid electrolyte.

Ink Composition for Light-Sintering

An ink composition for light-sintering according to an embodiment is a slurry for manufacturing a thin-film oxide-based solid electrolyte sheet by light-sintering, and the ink composition for light-sintering may include an oxide-based solid electrolyte.

The oxide-based solid electrolyte may be lithium ion conductive oxide particles having a particle shape. The lithium ion conductive oxide particles are particles in the form of a powdered compound including an oxygen element and having conductivity for lithium ions, and may include at least one selected from zirconium (Zr), phosphate ($PO_4$), and titanium (Ti).

Specifically, the lithium ion conductive oxide particles may be at least one compound selected from lithium lanthanum zirconium oxide (LLZO) compounds, lithium lanthanum titanate oxide (LLTO) compounds, lithium aluminum germanium phosphate (LAGP) compounds, and lithium aluminum titanium phosphate (LATP) compounds. More specifically, the lithium ion conductive oxide particles may be lithium lanthanum zirconium oxide (LLZO) compounds represented by a chemical formula $Li_7La_3Zr_2O_{12}$ and having a garnet structure. When the above-described type of compound, particularly the LLZO compound, is applied as the lithium ion conductive oxide particles, an oxide-based solid electrolyte sheet having characteristics such as excellent ion conductivity, stability with lithium metal, and a wide potential window range may be manufactured.

The ink composition for light-sintering may include a binder including a polymer including a hydroxyl group, an acetyl group, and an acetal group. The binder may appropriately bind oxide particles and may contribute to improving the adhesion of the slurry to the substrate.

The binder may include a polymer including a hydroxyl group, an acetyl group, and an acetal group, and specifically, may include a polyvinyl acetal copolymer including a structural unit having a hydroxyl group, a structural unit having an acetyl group, a structural unit having an acetal group, or combinations thereof.

The polyvinyl acetal copolymer may include a structural unit having a hydroxyl group. Specifically, the structural unit having the hydroxyl group may provide an effect of improving strength, bonding strength, and solubility in a polar solvent, and may be a structural unit represented by the following chemical formula 1.

[Chemical formula 1]

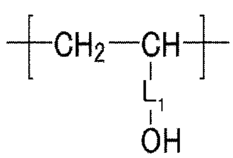

In chemical formula 1, $L_1$ may be a single bond or an alkylene having 1 to 5 carbon atoms, specifically, a single bond or 1 to 3 carbon atoms, and more specifically, a single bond or methylene.

The polyvinyl acetal copolymer may include a structural unit having two or more different hydroxyl groups.

With respect to 100 wt% of the polyvinyl acetal copolymer, the content of the structural unit having the hydroxyl group may be 4 wt% to 25 wt%, specifically 12 wt% to 20 wt%, and more specifically 15 wt% to 17 wt%. When the content of the structural unit having the hydroxyl group is less than the above-described range, the strength of the slurry may be

reduced, the intermolecular bonding force may be reduced, and the solubility in a polar solvent may be reduced, and when the content thereof exceeds the above-described range, the slurry may become excessively rigid, making it difficult to form a sheet (coating, tape casting, etc.)

The polyvinyl acetal copolymer may include a structural unit having an acetyl group. Specifically, the structural unit having the acetyl group may contribute to lowering the viscosity and glass transition temperature of the solution, and may be a structural unit represented by the following chemical formula 2.

[Chemical formula 2]

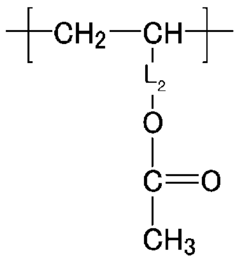

In chemical formula 2, $L_2$ may be a single bond or an alkylene having 1 to 5 carbon atoms, specifically, a single bond or an alkylene having 1 to 3 carbon atoms, and more specifically, a single bond or methylene.

The polyvinyl acetal copolymer may include structural units having two or more different acetyl groups.

With respect to 100 wt% of the polyvinyl acetal copolymer, the content of the structural unit having the acetyl group may be 1 wt% to 12 wt%, specifically, more than 1 wt% and 12 wt% or less, specifically, 3 wt% to 9 wt%, and more specifically, 4 wt% to 6 wt%. When the content of the structural unit having the acetyl group is less than the above-described range, the solution viscosity may become excessively high, and the glass transition temperature may become high, and when the content thereof exceeds the above-described range, the viscosity of the solution may decrease and the glass transition temperature may decrease, making the slurry manufacturing process difficult.

The polyvinyl acetal copolymer may include a structural unit having an acetal group. Specifically, by including the structural unit having the acetal group, the ductility and flexibility of the polyvinyl acetal copolymer may be improved, and compatibility with a heterogeneous resin may be increased, and the structural unit may be represented by the following chemical formula 3.

[Chemical Formula 3]

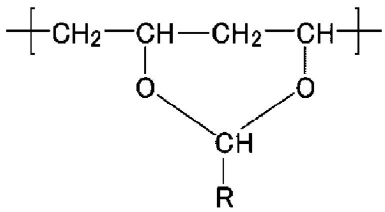

In chemical formula 3, R may be hydrogen, a substituted or unsubstituted hydrocarbyl having 1 to 10 carbon atoms, may be specifically a substituted or unsubstituted hydrocarbyl having 1 to 5 carbon atoms, may be specifically a substituted or unsubstituted hydrocarbyl having 1 to 4 carbon atoms, and may be more specifically methyl or propyl. For example, a polyvinyl acetal copolymer (polyvinylacetoacetal) in which R is an alkyl group having 1 carbon atom may be obtained by acetalization with acetaldehyde, and a polyvinyl acetal copolymer (polyvinylbutyral) in which R is an alkyl group having 3 carbon atoms may be obtained by acetalization with butyl aldehyde.

The polyvinyl acetal copolymer may include a structural unit having two or more different acetal groups. For example, the polyvinyl acetal copolymer may include a polyvinyl acetoacetal structural unit and a polyvinyl butyral structural unit.

With respect to 100 wt% of the polyvinyl acetal copolymer, the content of the structural unit having an acetal group may be 65 wt% to 85 wt%, specifically more than 65 wt% and 85 wt% or less, specifically 70 wt% to 80 wt%, and more specifically 75 wt% to 79 wt%. When the content of the structural unit having an acetal group is less than the above-described range, problems such as reduced ductility, reduced flexibility, and reduced compatibility with other types of resins may occur.

For example, the polyvinyl acetal copolymer may include a structural unit having a hydroxyl group, a structural unit having an acetyl group, and a structural unit having an acetal group, and the structural unit having a hydroxyl group, the

structural unit having an acetyl group, and the structural unit having an acetal group may be as described above, respectively.

The polyvinyl acetal copolymer may be a random polyvinyl acetal copolymer in which the structural unit having a hydroxyl group, the structural unit having an acetyl group, and the structural unit having an acetal group are irregularly arranged, and may be expressed, for example, by the following chemical formula 4.

[Chemical Formula 4]

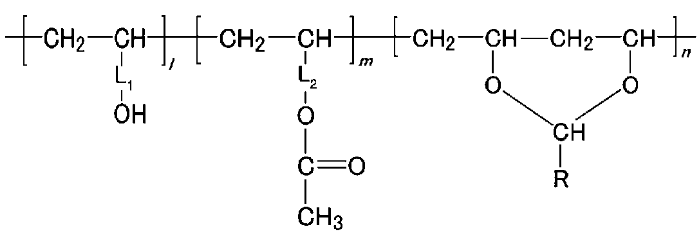

In chemical formula 4, l, m, and n are each independently an integer greater than or equal to 1, and $L_1$, $L_2$, and R may be as described above.

For example, the polyvinyl acetal copolymer may include a polyvinyl alcohol structural unit, a polyvinyl acetate structural unit, and a polyvinyl acetoacetal structural unit and/or a polyvinyl butyral structural unit.

The average degree of polymerization of the binder, specifically the polymer, more specifically the polyvinyl acetal copolymer, may be 10000 or less, and may also have a weight average molecular weight of $1.0 \times 10^4$ g/mol to $9.0 \times 10^4$ g/mol. The weight average molecular weight is specifically $3.0 \times 10^4$ g/mol to $8.0 \times 10^4$ g/mol, and may be more specifically $5.0 \times 10^4$ g/mol to $7.0 \times 10^4$ g/mol. When an weight average molecular weight is less than the above-described range, the adhesive strength of the ink composition formed as a slurry may be significantly deteriorated, and when the weight average molecular weight exceeds the above-described range, the solubility of the binder may be reduced, and the ductility of the sheet may be significantly reduced.

The binder may be included in an amount of 2 wt% to 40 wt% based on the total weight of the ink composition for light-sintering. When the content of the binder is included within the above-described range, the flexibility of the electrolyte sheet may be further increased.

The ink composition for light-sintering according to an embodiment may include a solvent. The solvent may be suitably used as long as this has a property of dissolving the binder, and the present disclosure is not limited thereto, but the solvent may be at least one selected from the group consisting of alcohol, ketone, amide, ester, ether, and aromatic hydrocarbon, and specifically, may be at least one selected from the group consisting of 2-propanol, toluene, terpineol, and N-Methyl-2-Pyrrolidone (NMP), and more specifically, 2-propanol and toluene may be mixed and used as the solvent.

The solvent may be included in an amount of 15 wt% to 45 wt% with respect to the total weight of the ink composition for light-sintering. When the content of the solvent is less than 15 wt%, the mixing of the ink composition for light-sintering may not be smooth, and when the content exceeds 45 wt%, the viscosity of the slurry may be low, which may make it difficult to form a sheet.

The ink composition for light-sintering may also include a plasticizer. The plasticizer may be included to improve the plasticity of the ink composition for light-sintering, and flexibility may be imparted to the adhesive layer formed by the ink composition for light-sintering.

The plasticizer is not particularly limited as long as this has good compatibility, low vapor pressure, and high plasticization efficiency, but the plasticizer may be, for example, at least one selected from a phthalate-based plasticizer, a trimellitic acid ester-based plasticizer, a phosphoric acid ester-based plasticizer, an epoxy-based plasticizer, a polyester-based plasticizer, an aliphatic acid ester-based plasticizer, and a chlorinated paraffin-based plasticizer, and specifically, the plasticizer may be a phthalate-based plasticizer.

More specifically, the plasticizer may be at least one phthalic acid ester plasticizer selected from the group consisting of dibutyl phthalate (DBP), butyl benzyl phthalate (BBP), di-isononyl phthalate (DINP), di(2-ethylhexyl) phthalate (DEHP), dioctyl phthalate (DNOP), and di-isodecyl phthalate (DIDP).

When the plasticizer is added, the plasticizer may be included in an amount of 5 wt% to 20 wt% based on the total weight of the ink composition for light-sintering. When the content of the plasticizer is within the above-described range, the flexibility of the obtained electrolyte sheet may be increased and the viscosity of the slurry due to the binder may be reduced.

The ink composition for light-sintering may include a dispersant. The dispersant may suppress aggregation of the inorganic solid electrolyte even when the concentration of the inorganic solid electrolyte is high, and form a uniform solid electrolyte layer. The dispersant is not particularly limited as long as this is commonly used for dispersing inorganic

substances in inorganic slurries, such as oxide-based solid electrolyte layers, and for example, a surfactant, a polycarboxylic acid ammonium salt, and a fatty acid series dispersant may be used, and specifically, commercial products such as KD-1, KD-2, KD-4, KD-6, KD-7, KD-9, KD-13, KD-20, KD-24, KD-25, and KD-57 may be used.

When the dispersant is added, The dispersant may be included in an amount of 0.001 to 10 wt% based on the total weight of the ink composition for light-sintering. When the content of the dispersant is within the above-described range, the homogeneity of the obtained electrolyte sheet may be further improved.

The Hansen solubility parameter (HSP) values of 2-propanol and toluene, among the solvents, are shown in Table 1 below.

Table 1:

| | $\delta_d^2$ | $\delta_p^2$ | $\delta_h^2$ | $\delta_t^2$ |
|---|---|---|---|---|
| 2-Propanol | 15.8 | 6.1 | 16.4 | 23.6 |
| Toluene | 18.0 | 1.4 | 2.0 | 18.2 |

In the present disclosure, the Hansen Solubility Parameter (HSP, $\delta_t$) refers to a parameter discovered by Charles M.Hansen, and a Hansen Solubility Parameter value $\delta_t$ is expressed by combining the following three parameters ($\delta_d$, $\delta_p$, and $\delta_h$) derived experimentally and theoretically. The unit of the Hansen Solubility Parameter (HSP) may be $MPa^{0.5}$.

$\delta_t$: Hansen solubility parameter.
$\delta_d$: Energy parameter due to dispersion force between molecules
$\delta_p$: Energy parameter due to dipole interaction between molecules.
$\delta_h$: Energy parameter due to hydrogen bond between molecules.

The Hansen solubility parameter (HSP) is a vector quantity expressed as ($\delta_d$, $\delta_p$, $\delta_h$), and may be expressed by plotting in a three-dimensional space (Hansen space) using three parameters as coordinate axes. Regarding the Hansen solubility parameter (HSP) of a commonly used material, the Hansen solubility parameter (HSP) of a desired material may be obtained by referring to a known information source such as a database, for example, a database. In a material in which the Hansen solubility parameter (HSP) is not registered in the database, the Hansen solubility parameter (HSP) may be calculated from a chemical structure of the material or a Hansen solubility method described below by utilizing computer program software such as Hansen Solubility Parameters in Practice (HSPiP).

The Hansen solubility parameter (HSP) of a mixture including two or more materials may be calculated as a vector sum of values obtained by multiplying the Hansen solubility parameter (HSP) of each material by a volume ratio of each material to the entire mixture. For example, the Hansen solubility parameter (HSP) of a random copolymer including three structural units may be calculated from the following mathematical expression 1. [Reference: Journal of Applied Polymer Science, vol. 42, 99-106 (1991)]

[Mathematical Expression 1]

$$\frac{\left(\frac{n_i^2M_i^2}{\rho_i}\right)\delta_i+\left(\frac{n_j^2M_j^2}{\rho_j}\right)\delta_j+\left(\frac{n_k^2M_k^2}{\rho_k}\right)\delta_k}{(n_iM_i+n_jM_j)\times[(\frac{n_i^2M_i^2}{\rho_i}+\frac{n_j^2M_j^2}{\rho_j}+\frac{n_k^2M_k^2}{\rho_k})\times(\frac{1}{\rho_{ijk}})]^{0.5}}$$

$n_i$: number of moles of structural unit i of the random copolymer
$M_i$: molecular weight of structural unit i of the random copolymer
$\rho_i$: density of the polymer composed of only the structural unit i
$\delta_i$: Hansen solubility parameter (HSP) of the polymer composed of only the structural unit i
$\rho_{ijk}$: density of the random copolymer composed of structural units i, j, and k

A relationship between the Hansen solubility parameter (HSPδt) and the three parameters ($\delta_d$, $\delta_p$, $\delta_h$) may be calculated from the following mathematical expression 2:

[Mathematical Expression 2]

$$\delta_t^2 = \delta_d^2 + \delta_p^2 + \delta_h^2$$

A value $\delta_t$, which is the Hansen solubility parameter (HSP) of the binder according to an embodiment, may be from 18 $MPa^{0.5}$ to 28 $MPa^{0.5}$, and specifically, the value may be 19 $MPa^{0.5}$ to 22 $MPa^{0.5}$. Since the value $\delta_t$, which is the Hansen solubility parameter (HSP) of the polyvinyl acetal copolymer, satisfies the above-described range, this may be easily dissolved in a mixed solvent in which a polar solvent and a nonpolar solvent are combined.

The value $\delta_t$, which is the Hansen solubility parameter (HSP) of the solvent according to an embodiment, may be 18 $MPa^{0.5}$ to 28 $MPa^{0.5}$, specifically 18 $MPa^{0.5}$ to 24 $MPa^{0.5}$. Since the value $\delta_t$, which is the Hansen solubility parameter (HSP) of the solvent, satisfies the above-described range, this may easily dissolve the binder.

The viscosity of the ink composition for light-sintering according to an embodiment may be 1,000 cp to 10,000 cp at a temperature of 25°C, specifically 4,000 cp to 8,000 cp. When the viscosity of the ink composition for light-sintering exceeds the above-described range, the fluidity of the slurry may decrease, and when applying the ink composition, uniformity such as the occurrence of stripes during molding may not be secured, and when the viscosity is below the above-described range, it may be difficult to secure rheological properties suitable for coating, and thus it may be difficult to perform an application to a substrate surface by a loading amount more than or equal to a certain amount.

As described above, the ink composition for light-sintering includes oxide-based electrolyte powder particles, a binder, and a solvent, and may further include a dispersant and a plasticizer as needed. The method for manufacturing the ink composition for light-sintering is not particularly limited, and may be manufactured by mixing and stirring each of the components.

More specifically, the binder and the solvent may be mixed, and the plasticizer and the dispersant may be added thereto as needed, and then stirred to manufacture a binder solution, and then, an oxide-based electrolyte powder may be mixed into the binder solution to manufacture a slurry. When manufacturing the ink composition for light-sintering, when oxide-based electrolyte powder particles are added after manufacturing a binder solution, the effect of increasing the dispersibility of the oxide in the slurry may be obtained.

Oxide-based Solid Electrolyte Sheet

The ink composition for light-sintering is applied on a substrate, and dried to manufacture an oxide-based sheet, and the oxide-based sheet is optically sintered to manufacture an oxide-based solid electrolyte sheet.

The substrate is not particularly limited, and may be a current collector in the form of copper (Cu) or aluminum (Al) foil, or may be an anode or a cathode for an all-solid-state lithium secondary battery. The flexibility, shape, type, and the like, of the substrate may be appropriately selected considering the light-sintering process to be performed thereafter and the characteristics of the ink composition for light-sintering.

The substrate is not limited thereto, but may have a thickness of 5 μm to 200 μm, and more specifically, may have a thickness of 10 μm to 50 μm.

The method of applying the ink composition for light-sintering on the substrate is not particularly limited, and may be applied by a method such as bar coating, casting, or spraying.

The ink composition for light-sintering may be applied to the substrate, and then may be dried, and the solvent may be removed from the composition, thereby manufacturing an oxide-based sheet. The method of drying the slurry applied on the substrate is not particularly limited, and for example, drying may be performed by a convection oven or the like. The drying may be performed at a temperature of 50°C to 200°C, and may be specifically performed at a temperature of 80 to 120°C, and the drying may be performed for 0.5 to 5 hours, specifically, for 1 to 3 hours.

The oxide-based sheet obtained after the drying may have a thickness of 10 to 300 μm. Specifically, the thickness of the oxide-based sheet may be 50 μm or more, 70 μm or more, 250 μm or less, or 200 μm or less. When the thickness of the oxide-based sheet is within the above-described range, an oxide-based solid electrolyte sheet that is thinly filmed and has excellent durability, etc. may be manufactured.

An oxide-based solid electrolyte sheet may be manufactured by light-sintering the manufactured oxide-based thin film sheet.

As described above, sintering may be performed in a short period of time using light-sintering, and thus, a degree of sintering may be controlled. This will be specifically described with reference to FIGS. 1A to 1D. During the sintering process, a grain boundary (a boundary in which the particles are in contact with each other) between the particles is

gradually expanded from the form of point contact in an initial stage of sintering to the form of surface contact (FIGS. 1A to 1D). As illustrated in FIG. 1A, in the case of a point contact form in which each particle maintains an initial shape, a large resistance is experienced when ions move as a simple contact. On the other hand, when a contact area increases through sintering to have a surface contact form, the resistance of the ion movement path is lowered, allowing for rapid ion conduction, and durability increases due to densification, allowing the sheet shape to be well maintained.

On the other hand, as a contact area between particles expands, pores which are empty spaces between particles, decrease and volume shrinkage may occur. In this case, the volume shrinkage rate may differ depending on the contact form between particles and the degree of coarsening. Specifically, in a stage in which grain boundaries (GB) are formed as sintering progresses, the volume shrinkage rate is within 3% (Fig. 1B), but in a stage in which the contact area between particles increases and coarsening progresses as sintering continues, the volume shrinkage rate may increase to about 10% to 20% (FIGS. 1C to 1D). In this way, when the particles in the thin film become excessively coarsened and the volume shrinkage rate increases, problems such as peeling from the substrate and/or cracking of the thin film may occur, resulting in a decrease in functionality.

Accordingly, the contact form is appropriately adjusted to prevent excessive coarseness and peeling due to volume shrinkage, and the like, but the structure in which ion conduction is achieved by maintaining a state of surface contact and securing a dense structure and ion movement path corresponds to the sintered form (FIG. 1B). In relation thereto, when a light-sintering process is applied, sintering may be performed rapidly, and a particle form may be formed as in FIG. 1B by controlling the shape of the particle according to the adjustment of the sintering degree. Additionally, the particles may be appropriately coarse as needed by considering the flexibility, shape, and the like, of the substrate.

The oxide-based solid electrolyte sheet may include light-sintered lithium ion conductive oxide particles. In the oxide-based solid electrolyte sheet manufactured by light-sintering the oxide-based thin film sheet including the lithium ion conductive oxide particles described above, the light-sintered lithium ion conductive oxide particles may correspond to the lithium ion conductive oxide particles. The light-sintered lithium ion conductive oxide particles may be different from each other in the particle shape, the color, and the particle-to-particle connection structure by light-sintering lithium ion conductive oxide particles.

The light-sintering may be performed in a pulse manner. The pulse manner refers to a method of applying a strong voltage as a pulse to a device such as a lamp that generates light and irradiating strong light that is generated instantaneously, and the light energy supplied by the irradiation may generate heat and may induce light-sintering. In this case, the light-sintering device generating light in a pulse manner is not particularly limited as long as this is a device that may operate under pulse conditions set as follows.

During the light-sintering, the light irradiation time per pulse (On-time), operating voltage (V), a duty cycle (%), a number of cycles, a thermal pulse frequency (Fire rate, Hz) forming the total pulse, and number of repetitions may be appropriately varied (adjusted) by controlling the controller, power supply, and the like, of the light-sintering device.

The light irradiation time (On-time) per pulse during the light-sintering may be 1000 to 4500 $\mu$s. Specifically, the light irradiation time (On-time) per pulse may be 1200 $\mu$s or more, or 1400 $\mu$s or more, and 4400 $\mu$s or less, 4200 $\mu$s or less, or 4000 $\mu$s or less.

The operating voltage (V) during the light-sintering may be 100 to 450 V. Specifically, the operating voltage (V) may be 120 V or more, or 150 V or more, and 440 V or less, 430 V or less, or 420 V or less.

The duty cycle (%) during the light-sintering may be 10 to 100%. Specifically, the duty cycle (%) may be 20 to 90%. The duty cycle may be calculated as a value of a ratio (%) of the light irradiation time (On-time) per pulse to the pulse period.

The number of cycles during the light-sintering may be 1 to 20 times. Specifically, the number of cycles during the light-sintering may be 5 to 15 times.

When the light irradiation time (On-time), the operating voltage (V), the duty cycle (%), and the number of cycles during the light-sintering are controlled within the above-described range, the light-sintering process time calculated by Equation 1 below may be shortened, so that the sintering process may be performed in a short period of time.

[Equation 1]

$$T_s = C / T_r$$

In the Equation 1, $T_s$ represents the light-sintering process time (s), $T_r$ represents the thermal pulse frequency (Fire rate, Hz), and C represents the number of repetitions.

The thermal pulse frequency (Fire rate, Hz) forming the total pulse during the light-sintering may be 1 to 50 Hz. Specifically, the thermal pulse frequency (Fire rate, Hz) forming the total pulse during the light-sintering may be 10 or more and 40 Hz or less.

The number of repetitions during the light-sintering may be 50 to 1000 times. Specifically, the number of repetitions during the light-sintering may be 100 or more and 400 or less.

The temperature of the substrate during the light-sintering may be maintained at a temperature of 300° C. or less.

Specifically, the temperature of the substrate during the light-sintering may be maintained in a temperature range of 5° C. to 100° C., 10° C. to 50° C., or 15° C. to 30° C. More specifically, the temperature of the substrate during the light-sintering may be maintained at a room temperature (RT) of substantially 20° C. to 25° C. When the temperature of the substrate is maintained within the above-described range during the light-sintering, it may be possible to prevent thermal stress from remaining on the substrate, thereby substantially alleviating problems such as destruction of the substrate and reduced durability, and various types of substrates may be selected without limitation and applied to the light-sintering process.

The light energy irradiated during the light-sintering may be 25 to 150 J/s·$cm^2$. Specifically, the light energy irradiated during the light-sintering may be 40 to 120 J/s·$cm^2$.

The oxide-based solid electrolyte sheet may have an area of 0.25 $cm^2$ or more. Specifically, the oxide-based solid electrolyte sheet may have an area of 0.5 to 50 $cm^2$.

A width and a length of the oxide-based solid electrolyte sheet may each be 0.5 cm or more. Specifically, the width and length of the oxide-based solid electrolyte sheet may each be 0.5 to 10 cm.

When the area, width, length, and the like, of the oxide-based solid electrolyte sheet are within the above-described range, this has a relatively large area and size as compared to the oxide-based solid electrolyte manufactured by the existing process, and thus the productivity, economy, and the like, of manufacturing the oxide-based solid electrolyte sheet may be further improved.

The oxide-based solid electrolyte sheet may have a thickness of 10 to 300 μm. Specifically, the thickness of the oxide-based solid electrolyte sheet may be 30 μm or more, 200 μm or less, or 100 μm or less. When the thickness of the oxide-based solid electrolyte sheet is within the above-described range, this has excellent ion conductivity as a thin film, and may secure higher energy density when applied to an all-solid-state lithium secondary battery.

The oxide-based solid electrolyte sheet may have a porosity of 0.1 to 20%. Specifically, the oxide-based solid electrolyte sheet may have a porosity of 1% or more, 5% or more, 10% or more, or 15% or less. When the porosity of the oxide-based solid electrolyte sheet is within the above-described range, the light-sintering may proceed smoothly, so that the density and durability of the sheet may be excellent.

The ionic conductivity of the oxide-based solid electrolyte sheet may be $10^{-6}$ S/cm to $10^{-2}$ S/cm, specifically $10^{-5}$ S/cm to $10^{-2}$ S/cm, and more specifically, $10^{-5}$ S/cm to $10^{-3}$ S/cm. In this case, the ion conductivity value may be a value measured at room temperature (25°C).

When the content of the elements and/or binder burning residues included in the substrate is within the above-described range, it may be confirmed that the oxide-based solid electrolyte sheet is manufactured through a smooth light-sintering process to suppress element diffusion between the substrate and the sheet is suppressed, so that the formation of an interface between the substrate and the sheet and an increase in resistance are substantially suppressed.

Since the oxide-based solid electrolyte sheet is manufactured by light-sintering, a thin-film-type oxide electrolyte layer may be formed and light energy may be locally irradiated only on the surface, thereby performing selective sintering.

Additionally, due to light-sintering, a structure forming the same particle-to-particle connection point as sintering using heat in a short period of time within several seconds may be generated, and manufacturing may be possible regardless of the shape of the sheet depending on the size of the light source.

<u>All-Solid-State Lithium Secondary Battery</u>

An all-solid-state lithium secondary battery according to an embodiment may include an oxide-based solid electrolyte sheet according to any one of the above-described embodiments.

An all-solid-state lithium secondary battery according to another embodiment may include an oxide-based solid electrolyte sheet according to any one of the above-described embodiments. In this case, the substrate may be a cathode or an anode for an all-solid-state lithium secondary battery. Specifically, the all-solid-state lithium secondary battery may include the oxide-based solid electrolyte sheet between the cathode and the anode for an all-solid-state lithium secondary battery.

The cathode is not particularly limited, and may include a lithium-transition metal oxide such as lithium cobalt oxide ($LiCoO_2$), lithium manganese oxide ($LiMn_2O_4$), or lithium nickel oxide ($LiNiO_2$) as a cathode active material, or a lithium-transition metal composite oxide in which a part of these transition metals is substituted with another transition metal. Specifically, the lithium-transition metal composite oxide may be an NCM-based cathode active material represented by the chemical formula $Li_xNi_aCo_bMn_cAl_dO_y$ (where $0<x\leq 1.1$, $2\leq y\leq 2.02$, $0<a<1$, $0<b<1$, $0<c<1$, $0<d<1$, $0<a+b+c+d\leq 1$). Additionally, the cathode active material may be a lithium iron phosphate (LFP)-based cathode active material represented by the chemical formula $LiFePO_4$.

The anode is not particularly limited, and may include a carbon-based active material such as artificial graphite and natural graphite, a silicon-based active material such as silicon oxide (SiOx; 0<x<2) and a Si-C composite, or a metal such as lithium metal.

A method for manufacturing the all-solid-state lithium secondary battery is not particularly limited, but a slurry including an anode or a cathode active material on a current collector may be formed and may then be subject to a process

such as drying and rolling to manufacture an anode or a cathode, respectively, and a light-sintering process may be performed on the oxide-based thin film sheet formed by forming and then drying a slurry including colored oxide particles, and the like, on the anode or the cathode, to form an oxide-based solid electrolyte sheet, from which the all-solid-state lithium secondary battery may be manufactured.

When the all-solid-state lithium secondary battery includes the oxide-based solid electrolyte sheet described above, this has no risk of ignition due to electrolyte leakage, or the like, and may have excellent performance such as high energy density.

Mode for Invention

Hereinafter, embodiments of the present invention will be further described with reference to specific experimental examples. The inventive examples and comparative examples included in the experimental examples are only illustrative of the present disclosure and do not limit the scope of the appended claims, and it is apparent to those skilled in the art to which the present disclosure belongs that various changes or modifications may be made within the concept and scope of the present disclosure, and thus it will be revealed that such changes or modifications fall within the appended claims.

1. Preparation of Ink Composition for Light-Sintering

(1) Inventive Example 1

A mixture of 0.42 g of a PVA1 binder according to Table 2 below, 1.58 g of 2-propanol and 1.58 g of toluene in 3.16 g of solvent, 0.2 g of Hypermer KD-6 dispersant from Croda, and 0.65 g of DBP plasticizer were primarily stirred at 3,000 rpm for 5 minutes using a Thinky paste mixer to manufacture a first slurry. In this case, a polyvinyl acetal unit is a structure in which a small amount of polyvinyl acetoacetal unit is mixed with a polyvinyl butyral unit.

Lithium lanthanum zirconium oxide (LLZO; $Li_7La_3Zr_2O_{12}$), lithium ion conductive oxide particles and the first slurry were weighed and added at a weight ratio of 1:1, and secondarily stirred at 3,000 rpm for 5 minutes using a Thinky paste mixer to manufacture an ink composition for light-sintering.

Additionally, the Hansen solubility parameter (HSP) value of the PVA1 binder was derived using the mathematical expression 1. The molecular weight, density, and Hansen solubility parameter (HSP) of the polymer composed of only each of the three components of the random copolymer, which are values necessary for using the mathematical expression 1, are shown in Table 3. The Hansen solubility parameter (HSP) value of the PVA1 binder is shown in Table 4 below.

(2) Comparative Example 1

An ink composition for light-sintering was manufactured by polymerization in the same manner as in Example 1, except that the binder was changed to the PVA2 binder of Table 2 below.

Additionally, the Hansen solubility parameter (HSP) value of the PVA2 binder was measured and are shown in Table 4 below. The Hansen solubility parameter value was confirmed using the mathematical expression 1 above.

(3) Comparative Example 2

An ink composition for light-sintering was manufactured by polymerization in the same manner as in Example 1, except that the binder was changed to the PVA2 binder of Table 2 below.

Additionally, the Hansen solubility parameter (HSP) value of the PVA3 binder was measured and are shown in Table 4 below. The above Hansen solubility parameter values were confirmed using mathematical expression 1.

Table 2:

| | Content of Structural Unit (mol%) | | | Weight Average Molecular Weight ($\times 10^4$ g/mol) | Tg (°C) |
|---|---|---|---|---|---|
| | Poly(vinyl alcohol) | Poly(vinyl acetate) | Poly (vinyl acetal) | | |
| PVA1 | 23 | 5 | 72 | 6.6 | 67 |
| PVA2 | 34 | 1 | 65 | 11 | 74 |
| PVA3 | 30 | 2 | 68 | 9.2 | 73 |

Table 3:

| | $\delta_d$ | $\delta_p$ | $\delta_h$ | $\delta_t$ | Molecular Weight of structural unit (g/mol) | Density ($g/cm^3$) |
|---|---|---|---|---|---|---|
| Poly(vinyl alcohol) | 17.5 | 12.5 | 10 | 23.7 | 44.05 | 1.25 |
| Poly(vinyl acetate) | 20.9 | 11.3 | 9.7 | 25.7 | 86.09 | 1.19 |
| Poly(vinyl butyral) | 19.1 | 9.5 | 8 | 22.8 | 141.21 | 1.14 |

Table 4:

| | $\delta_d$ | $\delta_p$ | $\delta_h$ | $\delta_t$ |
|---|---|---|---|---|
| PVA1 | 17.0 | 8.5 | 7.2 | 20.3 |
| PVA2 | 16.7 | 8.4 | 7.0 | 19.9 |
| PVA3 | 16.9 | 8.4 | 7.1 | 20.2 |

2. Evaluation of the solubility of the first slurry

FIG. 2 is an image illustrating a degree of dissolution of the first slurry of Inventive Example 1, Comparative Example 1, and Comparative Example 2. Referring to FIG. 2, in the case of the first slurry of Inventive Example 1, it may be confirmed with the binder is completely dissolved and exists in a liquid state, and in the case of the first slurry of Comparative Examples 1 and 2, it may be confirmed with the naked eye that the binder is not completely dissolved and a solid content thereof remains.

3. Manufacturing of Oxide-Based Solid Electrolyte Sheet through Light-Sintering

Manufacturing Example 1

The ink composition for light-sintering of Inventive Example 1 was cast on a substrate (Cu-foil current collector) having a thickness of 20 μm with a loading weight (LW) of 2000 $mg/cm^2$, and then dried at room temperature for 1 hour to manufacture an oxide-based thin film sheet having a thickness of about 60 to 200 μm.

The oxide-based thin film sheet manufactured above was cut into a size of 1 cm × 1 cm to 3 cm × 3 cm and loaded into a light-sintering device (PulseForge Invent). Then, light-sintering was performed on the oxide-based thin film sheet according to the light-sintering conditions in Table 5 below to manufacture an oxide-based solid electrolyte sheet of Manufacturing Example 1 having a thickness of about 50 to 150 μm, which is shown in FIG. 3. In this case, the temperature of the substrate was maintained at room temperature of 20 to 25°C.

Table 5:

| Light-Sintering Condition | | |
|---|---|---|
| Conditions forming one pulse | Voltage | 300 V |
| | Light irradiation time per pulse | 3000 μs |
| | (On-time) | |
| | Duty Cycle | 60% |
| | Cycle Number | 10 times |
| Operating Condition | Fire Rate | 25 Hz |
| | Number of repetitions | 250 times |
| | Irradiated Light Energy | 75 $J/s{\cdot}cm^2$ |

Referring to FIG. 3, it may be confirmed that the oxide-based solid electrolyte sheet of Manufacturing Example 1 was effectively sintered using light energy within a few seconds. Additionally, as a result of the light energy being irradiated locally only on the surface, no deformation due to thermal energy was observed in a metal sheet used as the current collector, and it may be confirmed that sintering was selectively performed only in the oxide-based thin film sheet.

Comparative Manufacturing Examples 1 and 2

Oxide-based thin film sheets of Comparative Manufacturing Examples 1 and 2 were manufactured in the same manner as Manufacturing Example 1, except that the ink composition for light-sintering of Inventive Example 1 was changed to the ink composition for light-sintering of Comparative Examples 1 and 2, but no thin film was formed.

4. Evaluation of Ionic Conductivity Characteristics

An electrochemical impedance analysis was performed on the oxide-based solid electrolyte sheet of Manufacturing Example 1 using a potentiostat (VMP-300) in an air atmosphere at room temperature (25°C), and the resistance component was measured to calculate the ionic conductivity according to Equation 2 below, and the results are shown in FIG. 4.

[Equation 2]

$$\sigma = D / (R \times S)$$

In Equation 2, σ represents an ionic conductivity value (S/cm), D represents a thickness of the oxide-based solid electrolyte sheet (cm), R represents a measured impedance resistance value (1/S), and S represents an area of the oxide-based solid electrolyte sheet ($cm^2$).

Referring to FIG. 4, the electrolyte sample after light-sintering was confirmed to be $1.32 \times 10^{-5}$ S/cm, from which it may be confirmed that the electrolyte sample has excellent performance.

Accordingly, the oxide-based solid electrolyte sheet of Manufacturing Example 1 above may provide an all-solid-state lithium secondary battery having no risk of ignition due to electrolyte leakage and having excellent ion conductivity while having high energy density.

The contents described above are merely examples of applying the principles of the present disclosure, and other components may be further included without departing from the scope of the present disclosure.

## Claims

**1.** An ink composition for light-sintering, comprising: a binder including a polymer having a hydroxyl group, an acetyl group, and an acetal group,

wherein a Hansen Solubility Parameter (HSP) value of the polymer is 18 $MPa^{0.5}$ to 28 $MPa^{0.5}$, and
a weight average molecular weight of the polymer is $1.0 \times 10^4$ g/mol to $9.0 \times 10^4$ g/mol.

**2.** The ink composition for light-sintering of claim 1, wherein the polymer includes a polyvinyl acetal copolymer including a structural unit having a hydroxyl group, a structural unit having an acetyl group, and a structural unit having an acetal group.

**3.** The ink composition for light-sintering of claim 2, wherein the structural unit having the hydroxyl group is a structural unit represented by the following chemical formula 1,

[Chemical Formula 1]

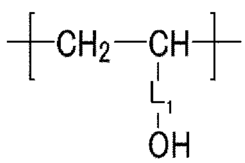

where $L_1$ represents a single bond or alkylene having 1 to 5 carbon atoms.

**4.** The ink composition for light-sintering of claim 2, wherein the structural unit having the acetyl group is a structural unit represented by the following chemical formula 2,

[Chemical Formula 2]

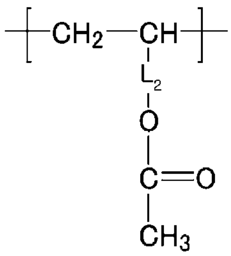

where $L_2$ represents a single bond or alkylene having 1 to 5 carbon atoms.

5. The ink composition for light-sintering of claim 2, wherein the structural unit having the acetal group is a structural unit represented by the following chemical formula 3,

[Chemical Formula 3]

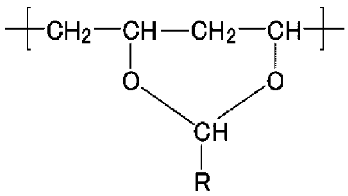

where R represents hydrogen, substituted or unsubstituted hydrocarbyl having 1 to 10 carbon atoms.

6. The ink composition for light-sintering of claim 2, wherein with respect to 100 wt% of the polyvinyl acetal copolymer, a content of the structural unit having the hydroxy group is 4 wt% to 25 wt%.

7. The ink composition for light-sintering of claim 2, wherein with respect to 100 wt% of the polyvinyl acetal copolymer, a content of the structural unit having the acetyl group is 1 wt% to 12 wt%.

8. The ink composition for light-sintering of claim 2, wherein with respect to 100 wt% of the polyvinyl acetal copolymer, a content of the structural unit having the acetal group is 65 wt% to 85 wt%.

9. The ink composition for light-sintering of claim 1, wherein the polymer is a random copolymer.

10. The ink composition for light-sintering of claim 1, wherein a viscosity of the ink composition for light-sintering is 1,000 cp to 10,000 cp at a temperature of 25°C.

11. The ink composition for light-sintering of claim 1, wherein the ink composition for light-sintering further includes lithium ion conductive oxide-based particles, a solvent, and a plasticizer.

12. The ink composition for light-sintering of claim 11, wherein a Hansen Solubility Parameter (HSP) value of the solvent is 18 $MPa^{0.5}$ to 28 $MPa^{0.5}$.

13. The ink composition for light-sintering of claim 11, wherein the solvent is at least one selected from the group consisting of 1,3-dioxane, dimethyl carbonate, acetonitrile, methylpyrrolidone, dimethylformamide, acetone, isopropanol, n-propanol, n-hexane, and toluene.

14. The ink composition for light-sintering of claim 11, wherein the plasticizer is at least one selected from the group consisting of dibutyl phthalate (DBP), butyl benzyl phthalate (BBP), di-isononyl phthalate (DINP), di(2-ethylhexyl) phthalate (DEHP), di(n-octyl)phthalate (DNOP), and di-isodecyl phthalate (DIDP).

15. The ink composition for light-sintering of claim 11, wherein the lithium ion conductive oxide-based particles are at least one selected from the group consisting of a garnet compound, a NASICON compound, and a perovskite compound.

**16.** An oxide-based solid electrolyte sheet manufactured with the ink composition for light-sintering according to any one of claims 1 to 15.

**17.** The oxide-based solid electrolyte sheet of claim 16, wherein the oxide-based solid electrolyte sheet has an ionic conductivity of $10^{-6}$ S/cm to $10^{-2}$ S/cm, and
the oxide-based solid electrolyte sheet has an area of 0.25 $cm^2$ or more and a thickness of 10 μm to 300 μm.

**18.** A method for manufacturing an oxide-based solid electrolyte sheet, comprising:

applying an ink composition for light-sintering according to any one of claims 1 to 15 onto a substrate;
drying the substrate to manufacture an oxide-based sheet; and
manufacturing an oxide-based solid electrolyte sheet by light-sintering the oxide-based sheet.

**19.** The method for manufacturing an oxide-based solid electrolyte sheet of claim 18, wherein a temperature of the oxide-based sheet during the light-sintering of the oxide-based sheet is 25°C to 500°C.

**20.** An all-solid lithium secondary battery comprising the oxide-based solid electrolyte sheet of claim 16.

[FIG.1a]

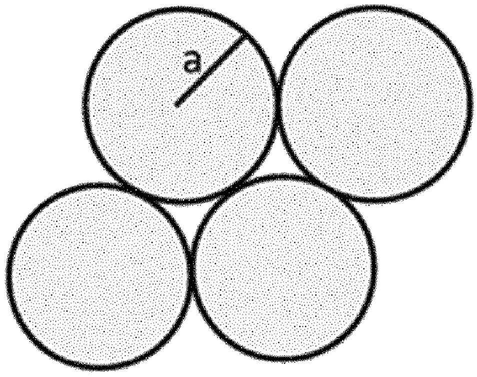


[FIG.1b]

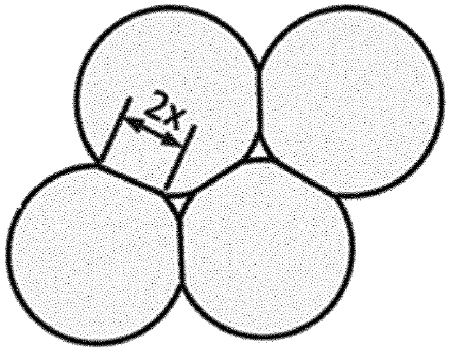


[FIG.1c]

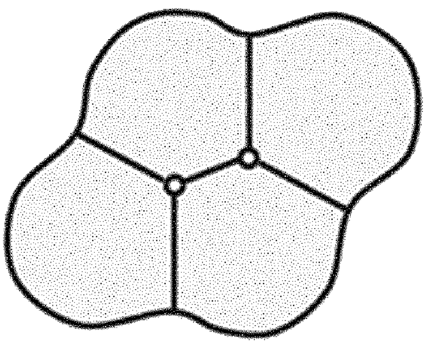

[FIG.1d]

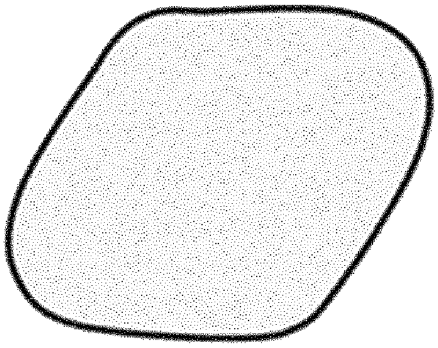

[FIG.2]

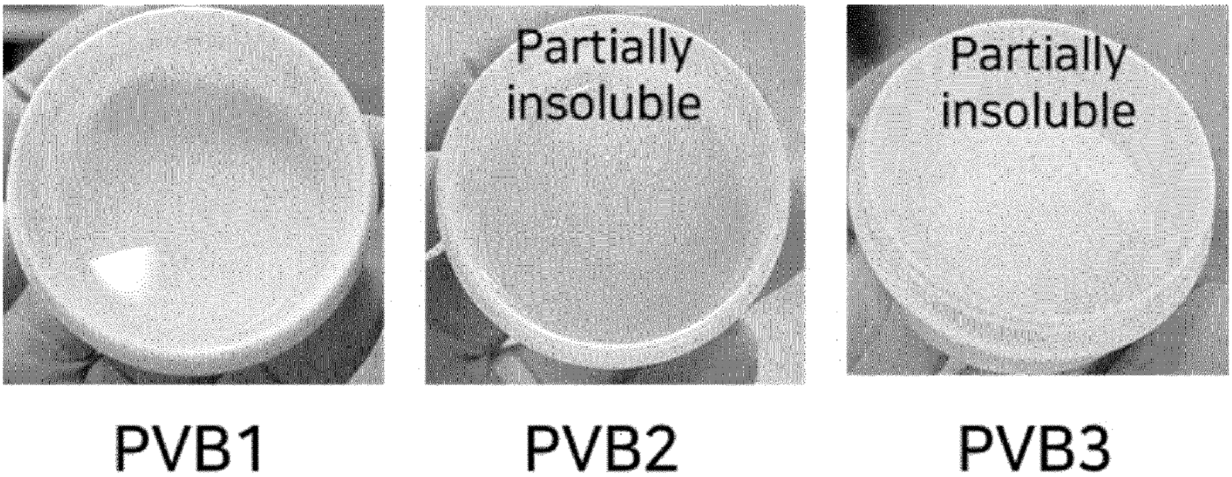


[FIG.3]

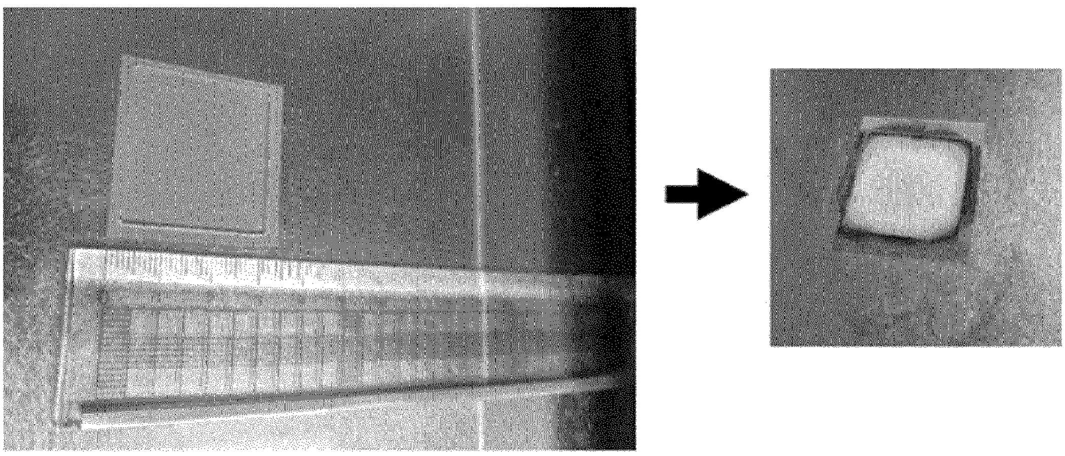

[FIG.4]

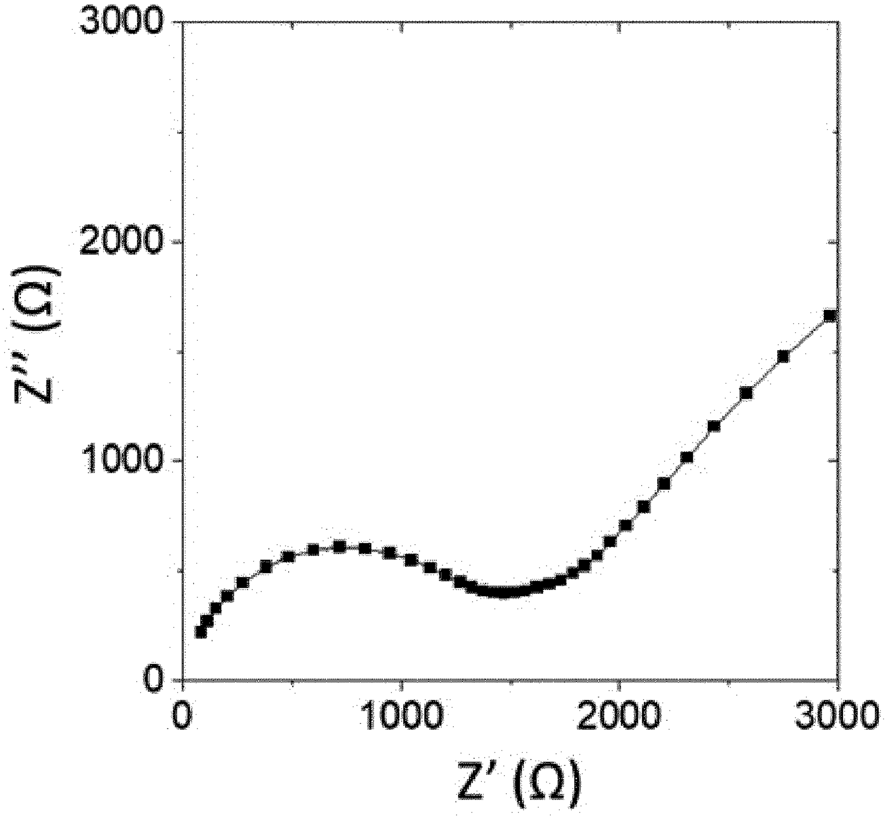

**INTERNATIONAL SEARCH REPORT**

International application No.
**PCT/KR2023/011353**

**A. CLASSIFICATION OF SUBJECT MATTER**

**C09D 11/101**(2014.01)i; **C09D 11/03**(2014.01)i; **H01M 10/0562**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

C09D 11/101(2014.01); C09D 11/037(2014.01); C09D 11/10(2006.01); H01M 10/0525(2010.01); H01M 10/0562(2010.01); H01M 10/058(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 바인더(binder), 중합체(polymer), 폴리비닐아세탈 공중합체(polyvinyl acetal copolymer), 광소결(light-sintering), 잉크 조성물(ink composition), 전고체 리튬 이차전지(all-solid lithium secondary battery)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0010069 A (IUCF-HYU (INDUSTRY-UNIVERSITY COOPERATION FOUNDATION HANYANG UNIVERSITY)) 30 January 2020 (2020-01-30)<br>See claims 1 and 7; and paragraphs [0012], [0048], [0104]-[0107], [0112] and [0114]. | 1-20 |
| Y | CUTLER, R. A. et al. Effect of the hydroxyl content and molecular weight of polyvinyl butyral on tape properties. Journal of the european ceramic society. 2009, vol. 29, pp. 3211-3218.<br>See abstract; pages 3211-3212 and 3214; tables 1-2; and figure 1. | 1-20 |
| Y | KR 10-2021-0102457 A (QUANTUMSCAPE BATTERY, INC.) 19 August 2021 (2021-08-19)<br>See claims 1, 17, 20, 39, 55 and 92; and paragraphs [0008], [0262]-[0263] and [0292]-[0297]. | 16-20 |
| A | US 2020-0251739 A1 (SAMSUNG SDI CO., LTD.) 06 August 2020 (2020-08-06)<br>See entire document. | 1-20 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 November 2023** | **13 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/011353**

**C. DOCUMENTS CONSIDERED TO BE RELEVANT**

| Category* | Citation of document, with indication, where appropriate, of the relevant passages | Relevant to claim No. |
|---|---|---|
| A | KR 10-2088100 B1 (IUCF-HYU (INDUSTRY-UNIVERSITY COOPERATION FOUNDATION HANYANG UNIVERSITY)) 11 March 2020 (2020-03-11) See entire document. | 1-20 |

Form PCT/ISA/210 (second sheet) (July 2022)

**INTERNATIONAL SEARCH REPORT**
**Information on patent family members**

International application No.
**PCT/KR2023/011353**

| Patent document cited in search report | Publication date (day/month/year) | Patent family member(s) | Publication date (day/month/year) |
|---|---|---|---|
| KR 10-2020-0010069 A | 30 January 2020 | KR 10-2270782 B1 | 29 June 2021 |
| KR 10-2021-0102457 A | 19 August 2021 | CN 105636921 A | 01 June 2016 |
| | | CN 105683127 A | 15 June 2016 |
| | | CN 105683127 B | 28 August 2020 |
| | | CN 111916821 A | 10 November 2020 |
| | | EP 3055268 A2 | 17 August 2016 |
| | | EP 3055268 A4 | 07 June 2017 |
| | | EP 3055268 B1 | 01 September 2021 |
| | | EP 3055269 A1 | 17 August 2016 |
| | | EP 3055269 A4 | 22 March 2017 |
| | | EP 3055269 B1 | 09 September 2020 |
| | | EP 3954670 A1 | 16 February 2022 |
| | | JP 2016-535391 A | 10 November 2016 |
| | | JP 2019-106378 A | 27 June 2019 |
| | | JP 2022-008486 A | 13 January 2022 |
| | | JP 6514690 B2 | 15 May 2019 |
| | | JP 6983826 B2 | 17 December 2021 |
| | | KR 10-2016-0065133 A | 08 June 2016 |
| | | KR 10-2016-0065896 A | 09 June 2016 |
| | | KR 10-2023-0007518 A | 12 January 2023 |
| | | KR 10-2368632 B1 | 28 February 2022 |
| | | KR 10-2478029 B1 | 15 December 2022 |
| | | US 10008742 B2 | 26 June 2018 |
| | | US 10103405 B2 | 16 October 2018 |
| | | US 10290895 B2 | 14 May 2019 |
| | | US 10305141 B2 | 28 May 2019 |
| | | US 10347936 B2 | 09 July 2019 |
| | | US 10403931 B2 | 03 September 2019 |
| | | US 10403932 B2 | 03 September 2019 |
| | | US 10431850 B2 | 01 October 2019 |
| | | US 10439251 B2 | 08 October 2019 |
| | | US 10651502 B2 | 12 May 2020 |
| | | US 10840544 B2 | 17 November 2020 |
| | | US 10862161 B2 | 08 December 2020 |
| | | US 11139503 B2 | 05 October 2021 |
| | | US 11171357 B2 | 09 November 2021 |
| | | US 11171358 B2 | 09 November 2021 |
| | | US 11177503 B2 | 16 November 2021 |
| | | US 11355779 B2 | 07 June 2022 |
| | | US 11367896 B2 | 21 June 2022 |
| | | US 11575153 B2 | 07 February 2023 |
| | | US 11600857 B2 | 07 March 2023 |
| | | US 11658338 B2 | 23 May 2023 |
| | | US 2015-0099188 A1 | 09 April 2015 |
| | | US 2015-0099190 A1 | 09 April 2015 |
| | | US 2015-0200420 A1 | 16 July 2015 |
| | | US 2016-0056500 A1 | 25 February 2016 |
| | | US 2017-0047611 A1 | 16 February 2017 |
| | | US 2017-0179522 A1 | 22 June 2017 |
| | | US 2017-0187067 A1 | 29 June 2017 |

Form PCT/ISA/210 (patent family annex) (July 2022)

**INTERNATIONAL SEARCH REPORT**
**Information on patent family members**

International application No.
**PCT/KR2023/011353**

| Patent document cited in search report | Publication date (day/month/year) | Patent family member(s) | Publication date (day/month/year) |
|---|---|---|---|
| | | US 2017-0263976 A1 | 14 September 2017 |
| | | US 2017-0346135 A1 | 30 November 2017 |
| | | US 2018-0069263 A1 | 08 March 2018 |
| | | US 2018-0076480 A1 | 15 March 2018 |
| | | US 2018-0342764 A1 | 29 November 2018 |
| | | US 2019-0020059 A1 | 17 January 2019 |
| | | US 2019-0103630 A1 | 04 April 2019 |
| | | US 2019-0207251 A1 | 04 July 2019 |
| | | US 2019-0280331 A1 | 12 September 2019 |
| | | US 2019-0334204 A1 | 31 October 2019 |
| | | US 2019-0372158 A1 | 05 December 2019 |
| | | US 2021-0005926 A1 | 07 January 2021 |
| | | US 2021-0313619 A1 | 07 October 2021 |
| | | US 2022-0223905 A1 | 14 July 2022 |
| | | US 2022-0344704 A1 | 27 October 2022 |
| | | US 9806372 B2 | 31 October 2017 |
| | | WO 2015-054320 A2 | 16 April 2015 |
| | | WO 2015-054320 A3 | 29 October 2015 |
| | | WO 2015-076944 A1 | 28 May 2015 |
| US 2020-0251739 A1 | 06 August 2020 | EP 3690993 A1 | 05 August 2020 |
| KR 10-2088100 B1 | 11 March 2020 | KR 10-2019-0126693 A | 12 November 2019 |
| | | US 2021-0047533 A1 | 18 February 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Journal of Applied Polymer Science*, 1991, vol. 42, 99-106